# EUROPEAN PATENT APPLICATION

(11) **EP 0 859 534 A2**
(43) Date of publication of application: **19.08.1998**
(21) Application number: 98102433.4
(22) Date of filing: 12.02.1998
(51) Int. Cl.: H04Q 11/04

(54) **ATM switch**

(30) Priority: 12.02.1997 JP 28035/97; 27.02.1997 JP 44276/97
(71) Applicant: KABUSHIKI KAISHA TOSHIBA, Kawasaki-shi, Kanagawa-ken 210 (JP)
(72) Inventor: Sakaue, Kenji, Yokohama-shi, Kanagawa-ken (JP); Unekawa, Yasuo, Yokohama-shi, Kanagawa-ken (JP); Sai, Manabu, Sagamihara-shi, Kanagawa-ken (JP)
(74) Representative: Zangs, Rainer E., Dipl.-Ing.

(57) **Abstract**

A buffer-shared ATM switch using a power saving shift register system includes an address generating circuit made by loop-connecting a plurality of address generating units paired with cells in a cell buffer. The order of alignment of the address generating units corresponds to the order of arrival of cells so that a unit for an earlier-arrived cell is positioned lower than a unit for a later-arrived cell. A vacant row detector refers to an address bit map stored in an address information register to output issue an EMPTY signal when the register is empty and to output a FIND signal when a cell to be output is found. A vacant row counter is responsive to the FIND and EMPTY signals to count the number of rows newly made vacant by output operation so that shift operations are executed by a frequency equal to the count number. A plurality of register sets each including an address pointer register and an address information register are connected so that storage occurs in a sequence, and are divided into blocks. A row controller effects searches simultaneously in blocks such that data is entered in a leading vacant row in one of the blocks. A controller regulates output operations in response to a result of searches of desired address information such that an address pointer is output by a selector for selecting one of address pointer output buses provided for respective blocks. Shift operations are effected to rewrite the output of the selector to the end of the address pointer register, based on a result of searches for a leading vacant row.

## Description

### BACKGROUND OF THE INVENTION

This invention relates to an ATM switch (asynchronous transfer mode switch) and, in particular, to an address generating circuit for a cell buffer in a buffer-shared ATM switch. ATM switches, in general, are used to deliver ATM cells to their destination with reference to address information (routing tag) added to the cells. ATM switches are classified into input buffer switches, output buffer switches and common buffer switches, depending on the position of the cell buffer for storing cells. Common buffer ATM switches are believed to have most excellent cell disposal characteristics when the total number of buffers is constant. There are some known types of address management in buffer-shared ATM snitches, such as linked list system and shift register system.

One of the functions that can be realized by using ATM switches is multi-casting which pertains to a function of outputting copies of an input cell to a plurality of output ports. When the linked list system is used to realize the multi-casting function, there is a limit in throughput of cells, and cell buffers cannot be used effectively. Using the shift register system, however, it is easy to realize multi-casting provided the same number of registers for storing address information as output links are prepared.

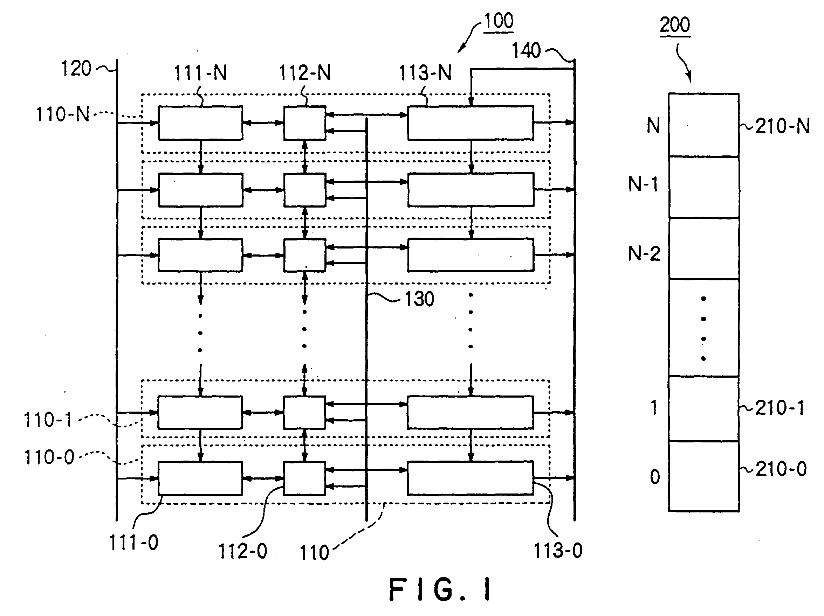

Fig. 1 shows a general construction of a conventional shift-register address generating circuit.

The address generating circuit 100 is composed of a plurality of address generating units 110 connected in a loop by a bus. Each address generating unit 110 is paired with each cell 210 in a cell buffer 200. Each address generating unit 110 includes an address information register 111 for storing address information, address register pointer 113 for storing the address of the cell buffer 200 in which a cell 210 is stored, and row control circuit 112 for controlling them. An address information input bus 120 is provided to transfer address information of cells from a switch input, and a control bus 130 is provided to transfer control data for the address generating circuit 100. An address pointer output bus 140 is provided to transfer a write address for writing a certain cell in the cell buffer and a read address read out from the cell buffer 200.

The order of alignment of the address generating units 110 corresponds to the order of arrival of cells, and a cell 210 of a lower address generating unit 110 is older than a cell 210 of an upper address generating unit 110. Therefore, in order to output a cell 210 for an output link in its timely order, address generating units 110 may be searched from the lowest one to find out one storing the address information of the output link. The address stored in the address pointer register of the address generating unit 110 found out by the search is the read address of the cell buffer 200.

Address management using the shift register system by the address generating circuit 100 comprises a sequence of three operations, namely, input operation, output operation and shift operation.

The input operation is first explained. The input operation is executed when a cell is entered. Upon entry of a cell, address information added to the cell is transferred to the address generating circuit 100, and the address generating circuit 100 is searched from its lowest row to find out empty rows (NULL row). Address information is input into the first found empty row, and the cell is written into the cell buffer 200.

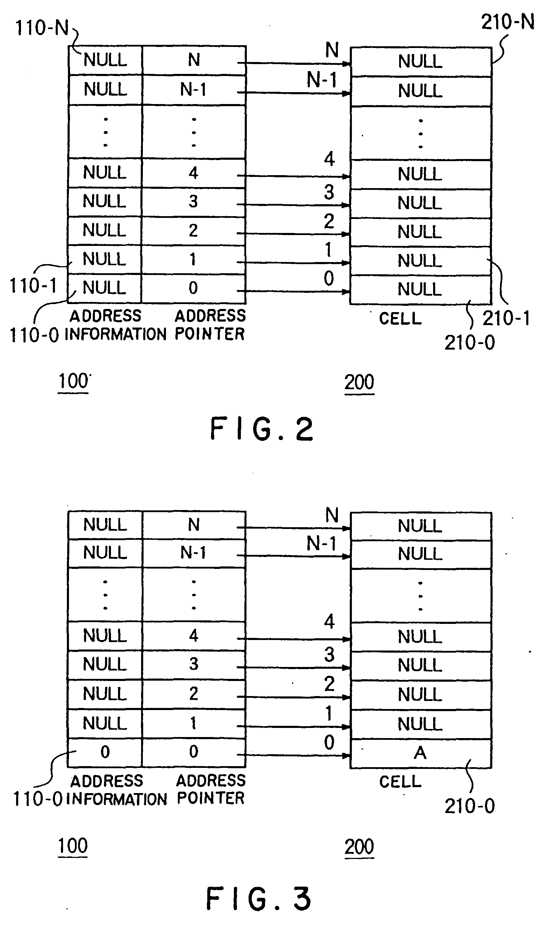

Fig. 2 shows a diagram illustrating the initial aspect of the address generating circuit 100. As to the address generating circuit 100, Fig. 2 shows contents of address information stored in address information registers 111 and address pointers stored in individual address pointer registers. As to the cell buffer 200, however, Fig. 2 shows the contents of storage in individual cells 210 corresponding to address generating units 110. The cell buffer 200 includes cells suffixed with 0 through N, namely, 210-0 through 210-N, and the address generating circuit 100 includes address generating units suffixed with 0 through N, namely, 110-0 through 110-N. "NULL" shows the empty status. Assume here that the aspect shown in Fig. 2 is the initial condition.

Fig. 3 is a diagram of the address generating circuit 100 during input operation (1) started by entering a cell "A" having address information "0" from the status of Fig. 2. As shown in Fig. 3, the lowest address generating unit 110-0 is changed to hold the address information "0", and "A" is stored in the corresponding lowest cell 210-0.

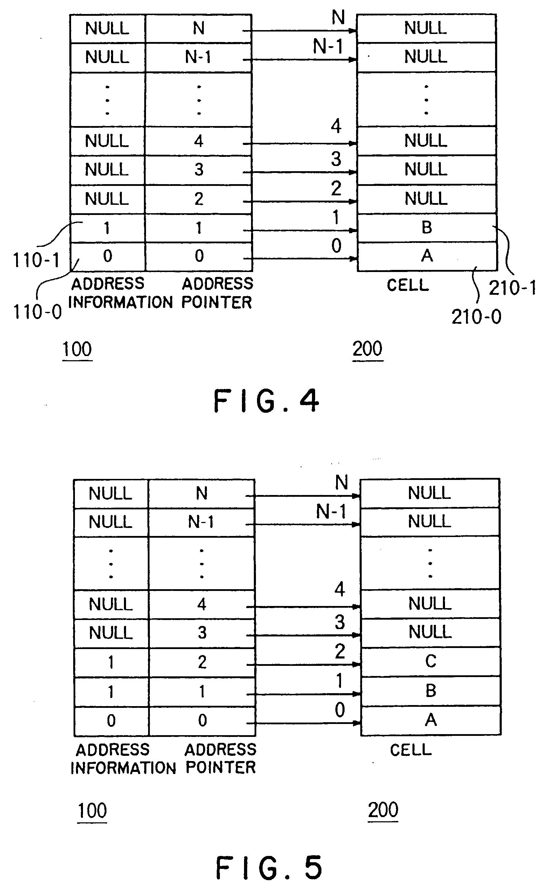

Fig. 4 is a diagram illustrating the input operation (2) of the address generating circuit 100 continuous from the status of Fig. 3 when a cell "B" having address information "B" is additionally entered. As shown in Fig. 4, the second address generating unit 110-1 from the bottom is changed to hold the address information "1", and "b" is stored in the cell 210-1 at the corresponding position.

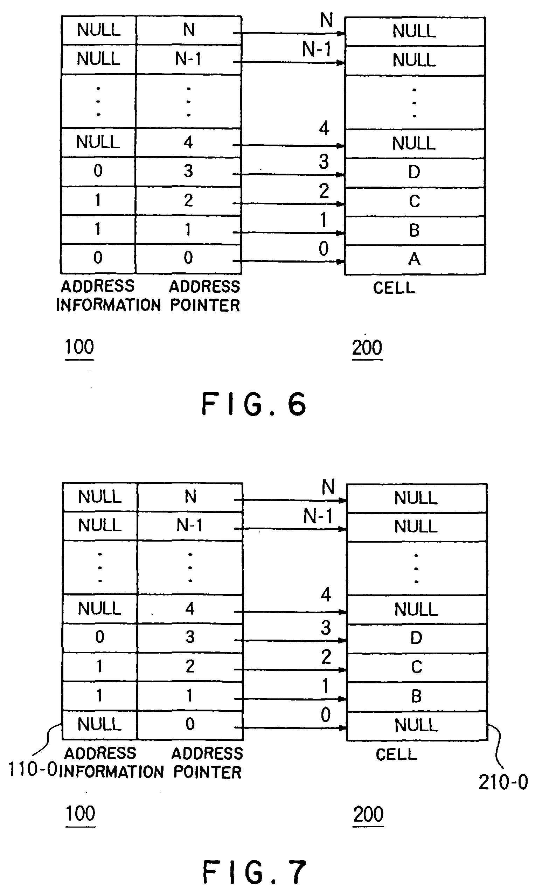

Similarly, Figs. 5 and 6 are diagrams illustrating input operations (3) and (4) when a cell "C" having address information "1" and a cell "D" having address information "0" are entered additionally.

Next explained is the output operation. The output operation is executed when a cell is output. For outputting a cell, the address generating circuit 100 is searched from the lowest row to find out a row having address information coinciding with the output link. The address pointer of the first found row is transferred to the cell buffer 200, and the cell 210 is read out from the cell buffer 200. When the output operation is executed, the address information of the output row is reset to "NULL".

Fig. 7 is a diagram of the address generating circuit during the output operation (1) when the cell 210-0 addressed to the output link "0" (having the address information "0") is output. In this case, cells having address information "0" are searched from the oldest one, namely, from the lowest row. Since the content of the address generating unit 110-0 in the lowest row coincides, the cell 210-0 in the corresponding lowest row is output. Responsively, the low of the output cell is returned to the empty status.

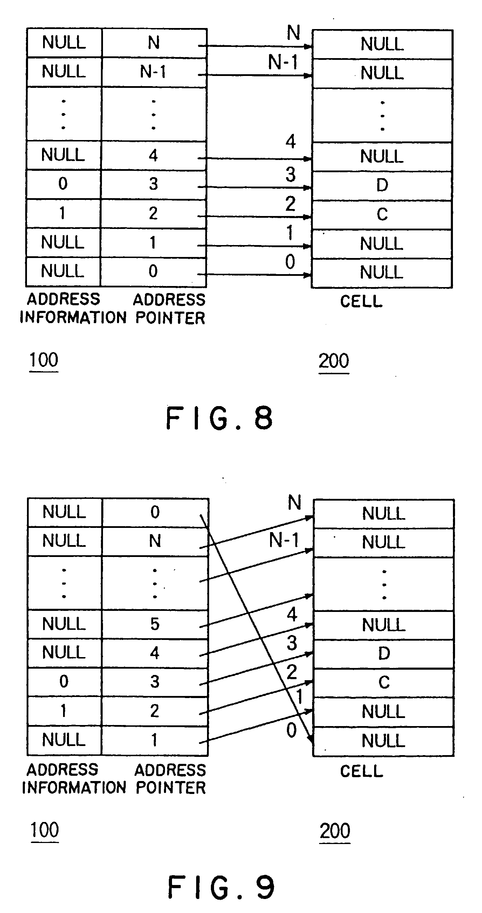

Fig. 8 is a diagram illustrating the address generating circuit during the output operation (2) when the cell addressed to the output link "1" (having address information "1") is output additionally. Here again, the output operation is executed similarly.

Next explained is the shift operation. The shift operation is executed to pack empty rows made by the output operation. In this operation, the empty rows in the address generating circuit 100 are searched from the lowest one, and the value of the address pointer in the first found empty row is output to the output bus 140, and the value in the immediately upper row is shifted to the immediately lower row. The value of the address pointer output to the address pointer output bus 140 is input to the highest row.

Fig. 9 is a diagram illustrating the address generating circuit after a shift operation (1) executed from the state of Fig. 8. Here is shown the state where movement occurs from the lowest row to the highest row, and the other rows are shifted to pack one empty row. In the address generating circuit 100, both the address information and the address pointers are shifted by one row.

Fig. 10 is a diagram illustrating the address generating circuit 100 in a shift operation (2) where another empty row is additionally packed from the state of Fig. 9. Here again, similar shift operation is executed.

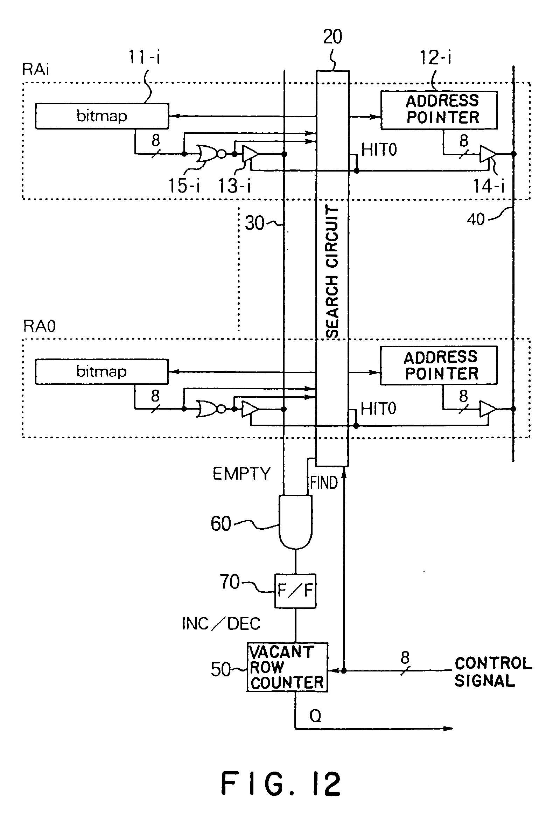

In the address generating circuit 100, multi-casting function is readily realized by preparing the same number of address information registers 111 as the number of output ports. Fig. 11 is an explanatory diagram of a conventional address generating circuit.

Assume here that the circuit includes four output ports. In this case, four bits are prepared as address information, and these bits of the address information register 111 are paired with output ports by one to one. Then, "1" is raised as the bit of each address information register 111 associated with each output port to which a cell should be delivered. Although the input operation and shift operation are the same as those explained above, the output operation is different in resetting only the address information bit associated with the output port in the row from which the cell 210 has been output.

In conventional technologies, the shift operation is executed to shift the maximum number of cells that can be mechanically output within one cell cycle in order to rewrite all empty rows to the end of the shift register. The maximum number of cells are typically equal to the number of output links of the switch. For example, if there are eight (N=8) output links of the switch, then the shift operation is repeated eight times. That is, by executing the shift operation eight times, eight cells, in maximum, are output by the output operation, resulting in newly making maximum eight empty rows. Logically, therefore, address points of all empty rows can be rewritten sequentially into the end of the shift register.

In the conventional technologies, if the number of new empty rows made by the output operation is less than eight, then the address generating circuit consumes a useless amount of electric power for useless rewrite processing. This is extreme especially when the load for ATM switch is light, having substantially no cell to be output.

For example, in an address generating circuit having 512 rows and using address pointers of nine bits, when rows are shifted while they all are empty, the address pointer of the row address RA=0 is rewritten into the end row of the shift register, and address pointers of all other row addresses RA=1 through RA=511 are shifted by one row. As a result, the contents of the register with 512*9 bits are renewed uselessly, causing useless electric charge and discharge of the address pointer output bus. If eight empty rows are made, these useless behaviors are repeated eight times.

The reason why the conventional technologies execute the shift operation of the maximum number of cells (the number of links) that can be output mechanically within one cell cycle lies in a difficulty of realizing the function of counting the number of rows that have newly become empty as a result of the output operation within a certain cell cycle.

In a switch supporting multi-cast cells, even if simply counting the number of hits by the search of output cells, the counted value does not represent the number of rows that are newly made empty by the output operation.

Assume here, For example, that the ATM switch has eight output links 0 through 7. When a certain multi-casted cell is addressed to output links 3 and 7, two bits, 3 and 7, in the address bit map are set at the moment where the cell is newly registered in the address generating circuit. During the search for output cells, when a cell for the output port 3 is first hit, the third bit alone is cleared in the bit map, but the seven bit is not cleared. Therefore, this row does not become empty.

As explained above, the address generating circuit 100 has register sets each containing an address information register 111 and an address pointer register 113 for each address of the cell buffer. If the cell buffer has the capacity of 1k words, 1k rows of register sets are required. Thus, any further increase in the capacity of the cell buffer causes a further increase in number of rows, an increase in load to the address pointer output bus, and a decrease in operation speed of the address generating circuit. In other words, it increases the time for reading the address pointers during the output operation and the time for rewriting the address pointer of the first-end empty row during the shift operation, and decreases the operation speed of the address generating circuit.

Moreover, in the row control circuit 112, the number of rows to be processed by the search circuit for searching output cells and row heads, and the time for the processing increases.

That is, an ATM switch whose operation speed is determined by the address generating circuit inevitably decreases in processing capability (throughput). In contrast, in order to ensure a reasonable speed of an ATM switch, its buffer capacity must be restricted, and this results in deteriorating the cell disposal characteristics of the ATM switch.

### SUMMARY OF THE INVENTION

It is therefore on object of the present invention to provide an ATM switch having a function of counting the number of rows newly made empty by output operations within one cell cycle to minimize the shifting times of rows in shift operations and to thereby minimize the consumption power therefor.

According to the present invention, since the ATM switch has the function of counting the number of rows that have newly become empty as a result of output operations within one cell cycle in order to minimize the shifting times in shift operations, useless consumption power can be minimized. As a result, the invention can realize a buffer-shared ATM switch using the shift register system, which consumes less power than conventional ATM switches.

It is another object of the present invention to provide an ATM switch which remarkably increase the speed of output and shift operations by reducing the load to the address pointer output bus substantially to by half.

It is further object of the present invention to provide an ATM switch which remarkably increase the speed of input, output and shift operations by executing searches in parallel.

It is still further object of the present invention to is to realize an address generating circuit that can control a large capacity cell buffer at a high speed. Another object of the invention is to provide a buffer-shared ATM switch having a high-speed switching function and a large capacity, and using the shift register system having good cell disposal characteristics.

According to the present invention there is provided an ATM switch comprising:
address generating means having a plurality of address generating units connected together and each containing an address pointer register for storing an address pointer for a cell buffer and an address information register for storing an address bit map;
search means for searching out vacant address generating units in which all bits have been cleared from said address bit maps in said address information registers thereof;
count means for counting the number of vacant address generating units searched out by said search means; and
shift processing means for shifting contents of address generating units subsequent to said vacant address generating units searched out by a frequency corresponding to the count value of said count means.

According to the invention, since rows of address generating units are divided into a plurality of blocks, and an address pointer output bins and a search circuit are provided for each block so that an arbiter arbitrates results of searches by all search circuits, the load to each address pointer output bus can be reduced substantially by half as compared with conventional circuits. Therefore, a remarkable increase in speed of output and shift operations can be realized. Moreover, by parallel searches, a remarkable increase in speed of input, output and shift operations is realized.

Additionally, the invention makes it possible to realize an address generating circuit permitting high-speed control of a large capacity cell buffer. Accordingly, the invention can realize a buffer-shared ATM switch having a high-speed switching function and a large capacity, and using a shift register system having good cell disposal characteristics, because the circuit includes address generating means in which a plurality of address generating units each containing an address pointer register for storing an address pointer of a cell buffer and an address information register for storing address information are connected together and divided into a plurality blocks.

### BRIEF DESCRIPTION OF THE DRAWINGS

Fig. 1 is a diagram showing a construction of a conventional address generating circuit of a shift register type;
Fig. 2 is a diagram explaining the initial state of the conventional address generating circuit;
Fig. 3 is a diagram explaining an input operation of the conventional address generating circuit;
Fig. 4 is a diagram explaining an input operation of the conventional address generating circuit;
Fig. 5 is a diagram explaining an input operation of the conventional address generating circuit;
Fig. 6 is a diagram explaining an input operation of the conventional address generating circuit;
Fig. 7 is a diagram explaining an output operation of the conventional address generating circuit;
Fig. 8 is a diagram explaining an output operation of the conventional address generating circuit;
Fig. 9 is a diagram explaining a shift operation of the conventional address generating circuit;

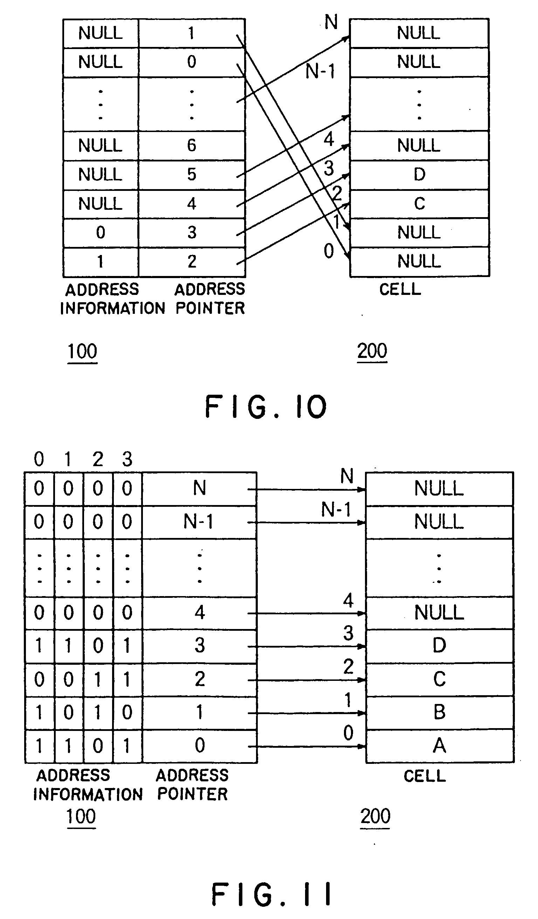

Fig. 10 is a diagram explaining a shift operation of the conventional address generating circuit;
Fig. 11 is a diagram explaining a multi-casting function of the conventional address generating circuit;
Fig. 12 is a diagram showing a construction of an address generating circuit according to the invention;

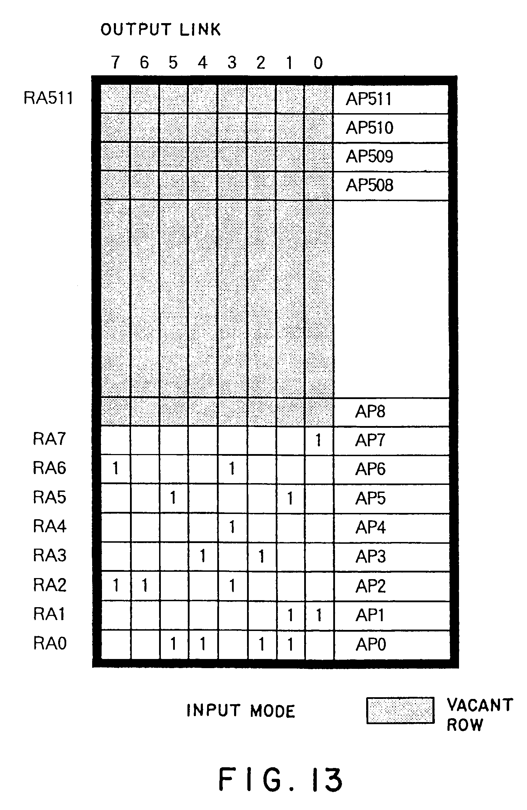

Fig. 13 is a diagram explaining an input operation of the address generating circuit according to the invention;

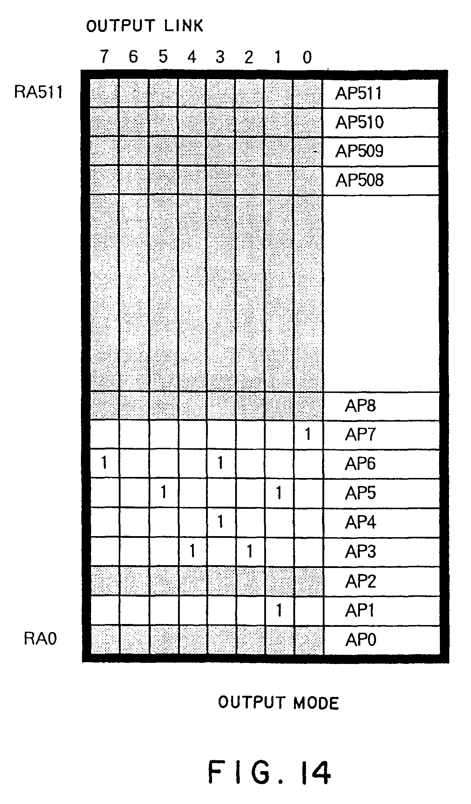

Fig. 14 is a diagram explaining an output operation of the address generating circuit according to the invention;

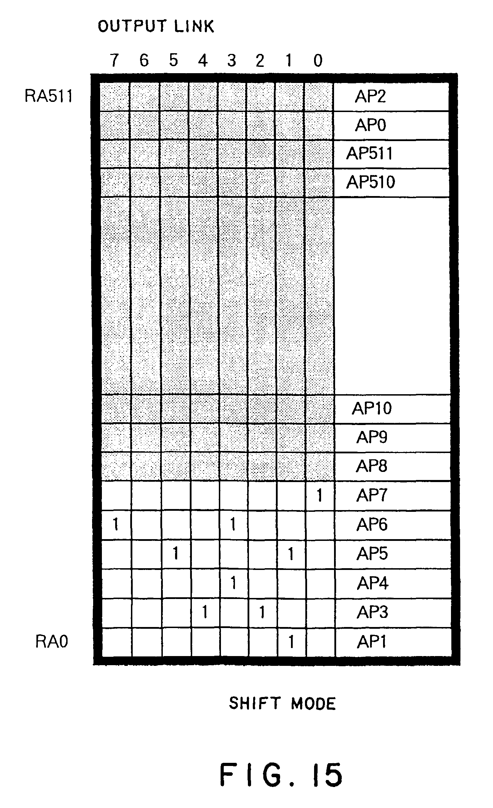

Fig. 15 is a diagram explaining a shift operation of the address generating circuit according to the invention;

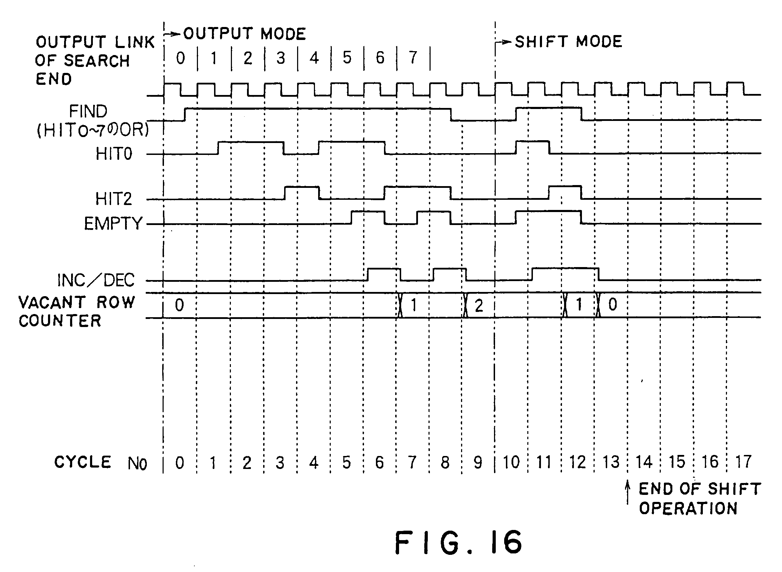

Fig. 16 is a timing chart of behaviors of the address generating circuit according to the invention;

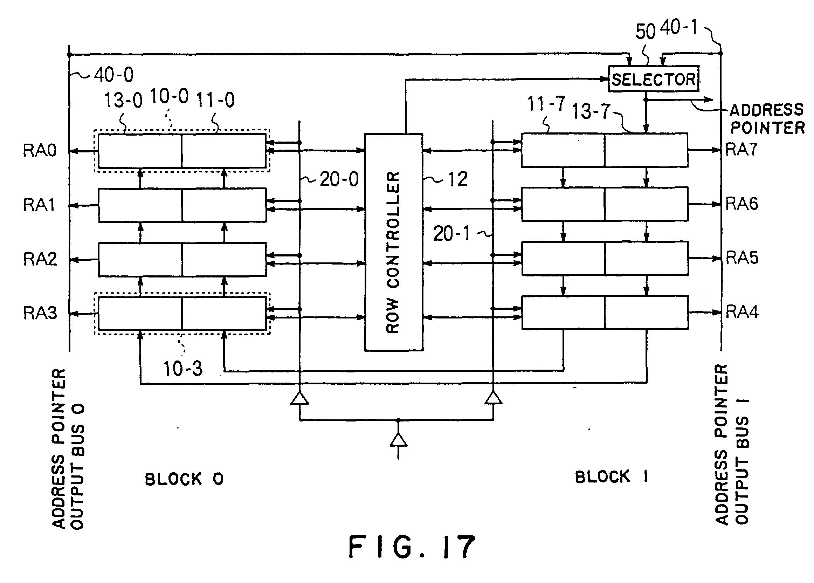

Fig. 17 is a diagram showing a construction of an address generating circuit according to the invention;

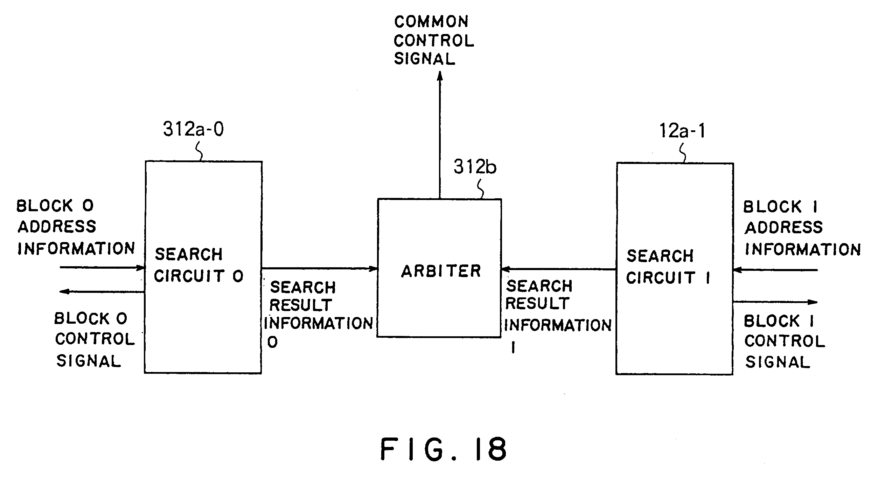

Fig. 18 is a diagram showing a construction of a row controller used in the invention;

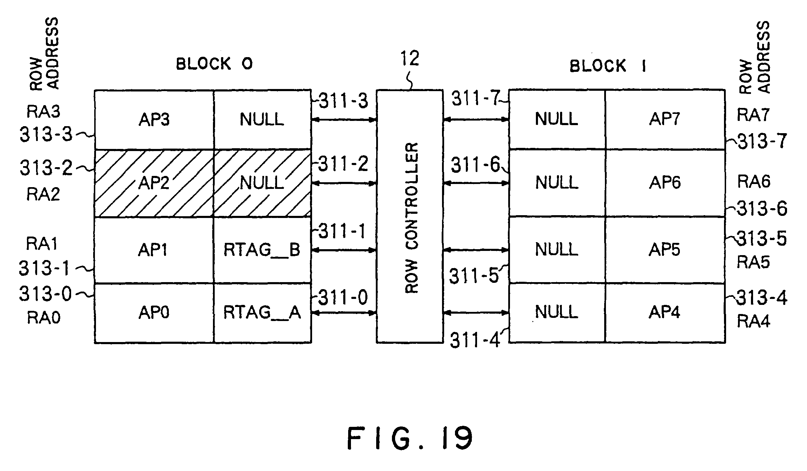

Fig. 19 is a diagram explaining an input operation (1) of the address generating circuit according to the invention;

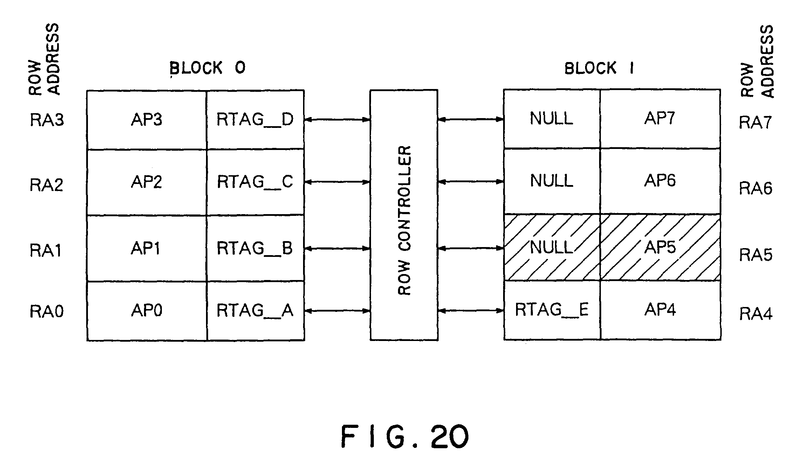

Fig. 20 is a diagram explaining an input operation (2) of the address generating circuit according to the invention;

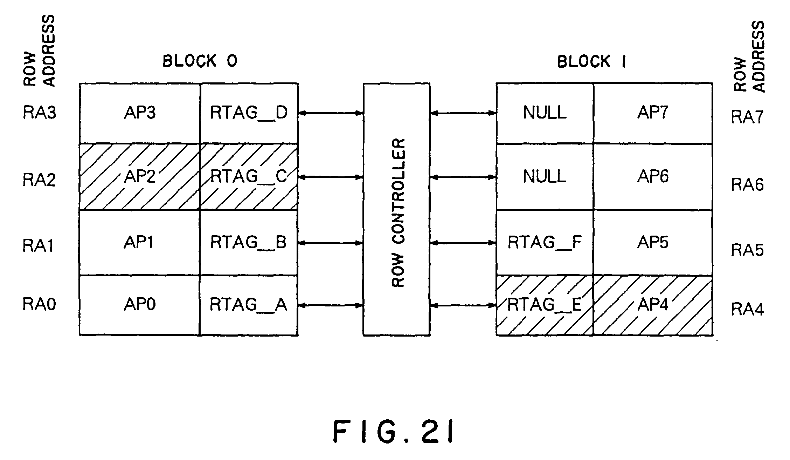

Fig. 21 is a diagram explaining an output operation (1) of the address generating circuit according to the invention;

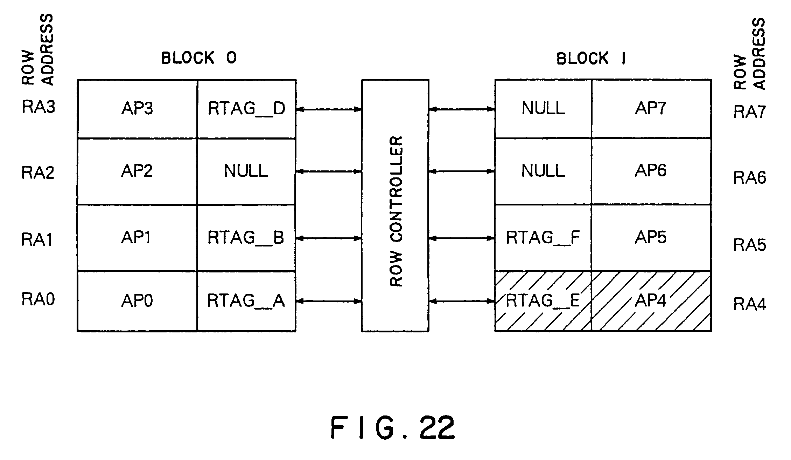

Fig. 22 is a diagram explaining an output operation (2) of the address generating circuit according to the invention;

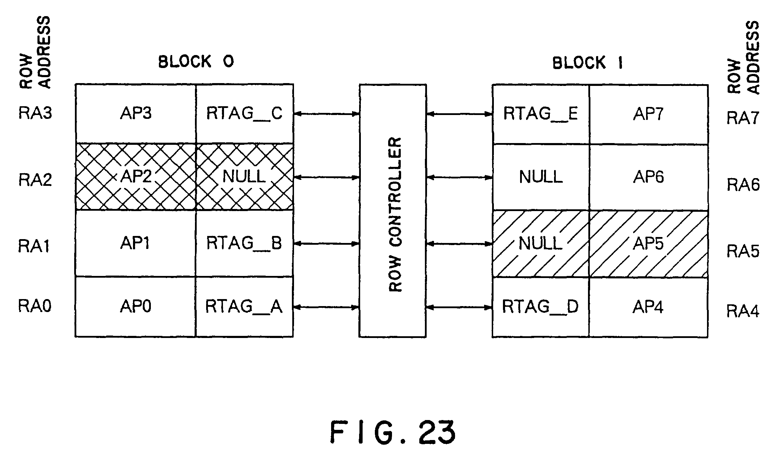

Fig. 23 is a diagram explaining a shift operation (1) of the address generating circuit according to the invention;

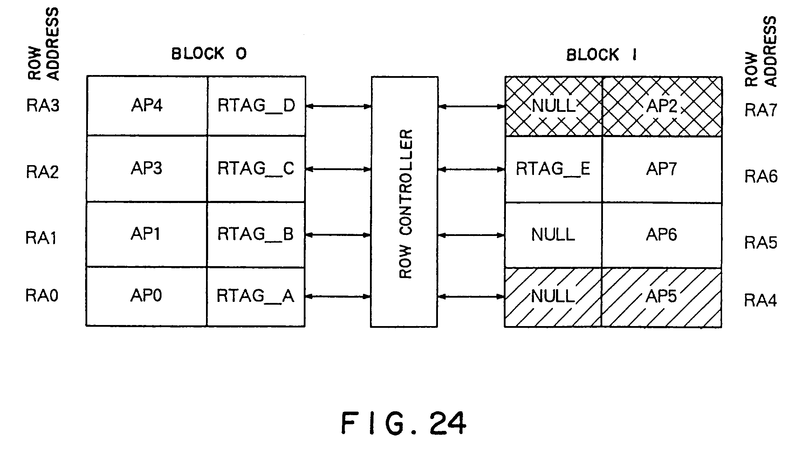

Fig. 24 is a diagram explaining a shift operation (2) of the address generating circuit according to the invention;

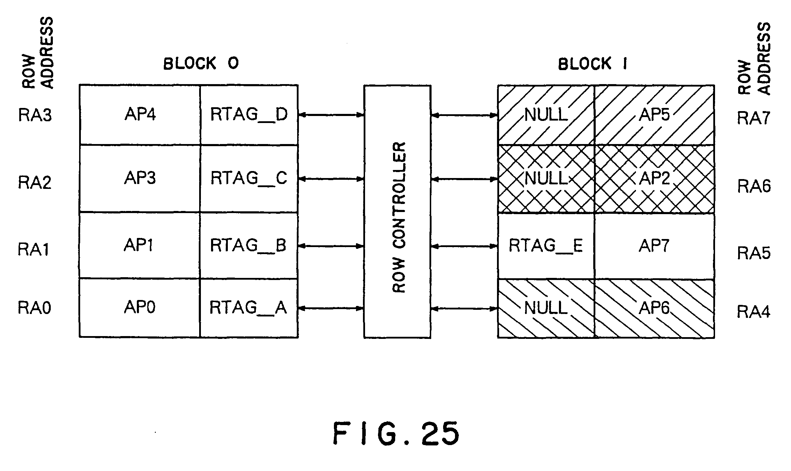

Fig. 25 is a diagram explaining a shift operation (3) of the address generating circuit according to the invention; and

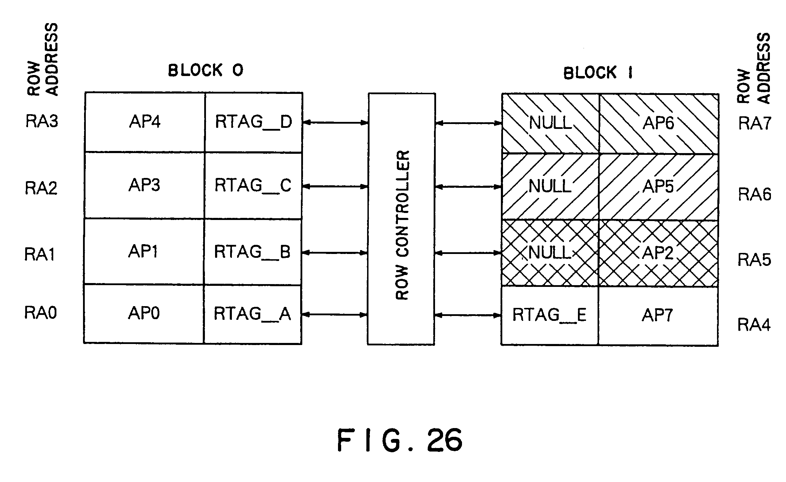

Fig. 26 is a diagram explaining a shift operation (4) of the address generating circuit according to the invention.

### DETAILED DESCRIPTION OF THE PREFERRED EMBODIMENTS

Fig. 12 shows a construction of an address generating circuit according to the invention.

The address generating circuit is composed of a plurality of address generating units (rows) RA0 through RAi connected in a loop by a bins. The address generating circuit further includes a search circuit 20, vacant row detecting bus 30, address pointer output bus 40, vacant row counter 50, AND circuit 60, flip-flop (F/F) 70, among others.

The address generating units RA0 through RAi are individually paired with cells in a cell buffer. Each address generating unit RAi contains an address information register 11-i storing an address bit map (output link information and address information), address pointer register 12-i storing an address pointer, tri-state buffers 13-i and 14-i, and detecting circuit 15-i. The order of alignment of the address generating units RA0 to RAi corresponds to the order of arrival of cells so that a cell for a lower address generating unit arrives earlier than a cell for an upper address generating unit.

Therefore, in order to output a cell for a certain output link in its timely order relative to others, the address generating units RA0 to RAi may be searched from the lowest one to find out one storing the address information for the output link. The address stored in the address pointer register of the detected one of the address generating units RA0 to RAi is the read address of the cell buffer. Usable as the address pointer are ten bits including parity bits.

The search circuit 20 has the function of all-zero detection of address bit maps 11-0 to 11-i. The vacant row counter 50 is configured to count the number of rows newly made vacant by an output operation. Supplied to the search circuit 20 and the vacant row counter 50 is a control signal.

Each row contains a circuit for detecting whether it, itself, is a vacant row. For this purpose, this embodiment is configured to introduce eight bits of the address bit map into a NOR circuit used as the detecting circuit 15. A result of detection by the vacant row detecting circuit 15 is output to the vacant row detecting bus 30 having one bit width through the tri-state buffer 13, in form of a NOR circuit. Namely, if the row is vacant, an EMPTY signal is output. The search circuit 20 outputs a FIND signal indicating that a target output cell has been found by the output cell search. The AND circuit 60 makes AND of the value of the vacant row detecting bus 30 and the FIND signal from the search circuit 20, and generates an incremental/decremental signal (INC/DEC) for the vacant row counter 50 via the flip-flop (F/F) 70. The reason why the AND signal of the EMPTY signal and the FIND signal is used to control the incremental/decremental operation of the vacant row counter 50 lies in that the FIND signal alone is not sufficient for indicating whether a row has become vacant or not.

Next explained are behaviors of the address generating circuit according to the invention.

In the example shown below, the cell buffer has the storage capacity of 512 cells, and the address generating circuit has 512 rows. For simplicity, rows RA0 through RA511 are assigned to row addresses 0 through 511. Here are used eight input/output links 0 through 7. Output links of the rows RA0 to RA511 correspond to address bit maps of Fig. 12, and are registered in the address information registers 11. Address pointers AP0 to AP511 are stored in the address pointer registers 12 of Fig. 12. Thus, explanation is made on input, output and shift operations, respectively.

### (Input Operation)

Fig. 13 is a diagram for explaining an input operation of the address generating circuit according to the invention. Fig. 13 shows a status where eight cells have been input into the cell buffer. Cells of rows RA4 and RA7 are uni-cast cells, and the others are multi-cast cells. The cell in the row RA0 has an address bit map of output links 1, 2, 4 and 5, and the cell in the row RA0 is output to these output links.

### (Output Operation)

Output search is first executed for the output link 0, for example, and then goes on sequentially for output links 1, 2, ... 7. The search is started from the leading row RA0 of 512 rows toward the last row RA511.

The search for an output operation started from the input completed state of Fig. 13 results as follows.
Search of a cell for the output link 0 hits the cell in RA1;
Search of a cell for the output link 1 hits the cell in RA0;
Search of a cell for the output link 2 hits the cell in RA0;
Search of a cell for the output link 3 hits the cell in RA2;
Search of a cell for the output link 4 hits the cell in RA0;
Search of a cell for the output link 5 hits the cell in RA0;
Search of a cell for the output link 6 hits the cell in RA2;
Search of a cell for the output link 7 hits the cell in RA2.

Fig. 14 is a diagram for explaining an output operation of the address generating circuit according to the invention. Fig. 14 shows a state where eight searches for output cells mentioned above have been completed. From comparison of Fig. 14 with Fig. 13, it is known that the bits for the searched output links have been cleared from the address bit maps in the rows hit by the searches. In this example, RA0 and RA2 have newly been made vacant by the output operation. Therefore, the vacant row counter 50 holds the count value "2". Since the output search is executed in the above-explained order, the vacant row counter 50 increments when the final output link that makes a row vacant is hit. That is, the vacant row counter 50 increments in the cycle where the row RA0 is hit by the search for the output link 5 and in the cycle where the row RA2 is hit by the search for the output link 7.

### (Shift Operation)

Fig. 15 is a diagram for explaining a shift operation of the address generating circuit according to the invention.

Shift operations are repeated the same number of times as the value of the vacant row counter 50. Since the rows RA0 and RA2 are newly made vacant by the output operation, address pointers AP0 and AP2 of the rows RA0 and RA2 are rewritten into the end of the shift register sequentially.

Fig. 15 shows a state where two shift operations have been completed.

A controller of the address generating circuit executes shift operations a number of times corresponding to the count value of the vacant row counter. The vacant row counter decrements upon each shift operation. Therefore, the count value is held "0" after all shift operations.

Fig. 16 is a timing chart of the address generating circuit according to the invention. Explained below are behaviors of the vacant row counter with reference to Fig. 16.

In the output mode (cycles 0 to 7), cells addressed to output links 0 to 7 are searched sequentially. In the input completed state of Fig. 13, cells for all output links are found, and the FIND signal is "H" in the cycles 0 to 7.

The row RA0 is hit in cycles 1, 2 and 4. In cycle 5, the row RA0 is hit, resulting in all bits in its output hit map being cleared, and the vacant row counter 50 increments accordingly. Similarly, in cycle 7, the row RA2 is hit, resulting in all bits in its output bit map being cleared, and the vacant row counter 50 count up here again. When the output mode terminates, the vacant row counter keeps the count value "2".

In the shift mode (cycles 10 to 17), shift operation is executed twice in accordance with the counter value "2" of the vacant row counter. As illustrated, two shift operations of rows RA0 and RA2 are executed in cycles 10 and 11, the count value of the vacant row counter 50 is decremented. The controller terminates the shift operation when the counter value of the vacant row counter 50 becomes "0".

In this example, bits in a bit map may be cleared within a search cycle, more specifically, at the rising edge of a hit signal of the row. The hit signal typically rises in a latter half of a search cycle.

The address pointer APi of a detected row RAi is output in form of a hit signal HITi of the row onto the address pointer output bus 40, using the tri-state buffer, at the end of the search cycle. Similarly, an all-zero decode signal of the address bit map Of the row RAi, using the hit signal HITi, may be output to the vacant row detecting bus 30, using the tri-state buffer, at the end of the search cycle.

Fig. 17 shows a construction of an address generating circuit according to another aspect of the

invention. In this example, the address generating circuit has a plurality of register sets (address generating units) 310 connected in a loop by a bus. The register sets 310 are paired individually with individual cells of the cell buffer. Each register set 310 contains an address information register 311 for storing address information, and an address pointer register 313 for storing the address in the cell buffer where a cell is stored. Further provided is a row controller 312 for controlling the register sets 310.

In the example shown in Fig. 17, the register sets 310 are divided into two blocks each for four addresses. In Fig. 17, the address generating circuit has eight rows of register sets, with row addresses RA0 to 3 assigned to block 0 and row addresses RA4 to 7 assigned to block 1. Block 0 includes an address information input bus 20-0 and an address pointer output but 340-0, and block 1 includes an address information input bus 320-1 and an address pointer output bus 340-1. A selector 350 is provided to select one of the address pointer output bus 340-0 and 340-1 under the control of the row controller 312.

Cell address information from a switch input portion is transferred to the address information input bus 320, and write addresses for writing a cell in the cell buffer and read addresses from the cell buffer are transferred to the address pointer output bus 340.

The order of alignment of the register sets 310 corresponds to the order of arrival of cells so that a cell of a register set whose row address has a smaller number arrives earlier than a cell of a register set 310 whose row address has a larger number.

Next shown in Fig. 18 is a construction of the row controller used in the invention. The row controller 312 contains search circuits 312a-0 and 312a-1 for blocks 0 and 1, and an arbiter 312b. The search circuits 312a-0 and 312a-1 issue search result information 0 or 1 and a control signal for block 0 or 1. The arbiter 312b outputs a common control signal based on the search circuits 312a-0 and 312a-1. For example, in response to search result information, the arbiter executes operations, including selection of one of register sets 310 corresponding to the earliest cell.

Explained below are input, output and shift operations, respectively.

### (Input Operation)

Fig. 19 is a diagram explaining an input operation (1) of the address generating circuit according to the invention (for simplicity, the vertical order of the row address RA0 to RA3 of register sets is inverted from that of Fig. 18).

In Fig. 19, for example, in the row addresses RA0 and RA1, address pointers "AP0" and "AP1" are stored in the address pointer registers 313-0 and 313-1, and output links "RTAG_A" and RTAG_B are stored in the address information registers 311-0 and 311-1. In the other row addresses RA2 to RA7, address pointers "AP2" to "AP7" are stored in the address pointer registers 313-2 to 313-7, and address information registers 311-2 to 311-7 are vacant (NULL).

For an input operation, the search circuits 312a-0 and 312a-1 within the row controller 312 execute searches for leading vacant rows simultaneously in blocks 0 and 1. In this case, row are searched from the lowest one. In block 0, rows searched in the order from row addresses RA0, RA1, RA3, and RA3. In block 1, however, rows are searched in the order in the order of RA4, RA5, RA6 and RA7.

The searches for leading vacant rows by the search circuits 312a-0 and 312l-1 in the row controller 312 hit the row address RA2 in block 0 and the row address RA4 in block 1. The arbiter 312b in the row controller 312 is controlled to select a row with the lowest address from search result information from the search circuits 312a-0 and 312a-1. That is, since block 0 is located lower than block 1, the controls to give block 0 a priority. In this example, the row address RA2 in block 0 is selected, and new address information is input there, and the address pointer "AP2" heretofore stored in the row address RA2 is output as a cell write address from the address generating circuit to the cell buffer. The address information input operation is executed by the address information input bus 320-0 shown in Fig. 17, and the row controller 312 outputs the address pointer "AP2" to the cell buffer through the selector 350 shown in Fig. 17.

In Fig. 20, since all rows in block 0 are used, the search results in not finding leading vacant row. In block 1, however, since the search hits the row address RA5, the arbiter 312b in the row controller 312 selects the row address RA5 and permits new address information to be input there. At the same time, the address pointer "AP5" heretofore stored in the row address RA5 is output as a cell buffer write address from the address generating circuit to the cell buffer. The input operation is executed by using the address information bus 320-1 shown in Fig. 17, and the row controller 312 outputs the address pointer "AP5" to the cell buffer through the selector 350 shown in Fig. 17.

### (Output Operation)

Fig. 21 is a diagram for explaining an output operation (1) of the address generating circuit according to the invention.

When the output operation is started, rows are searched from one with the lowest address simultaneously in both blocks 0 and 1. Assume here that both address information "RTAG_C" and information "RTAG_D" are hit by searched for a certain output link. In this case, the search by the row controller 312 hits the row address RA2 in block 0 and the row address RA4 in block 1. Then, the arbiter 312b in the row controller 312 selects one with the cell having arrived earlier, namely, the row address RA2 in block 0. The output operation is executed by outputting the address pointer "AP2" to the cell buffer, using the selector 350 of the row controller shown in Fig. 17.

Fig. 22 is a diagram for explaining an output operation (2) of the address generating circuit according to the invention.

Assume, for example, that the address information "RTAG_E" is hit. In Fig 22, when the searches by the search circuits 312a-0 and 312a-1 in the row controller 312 are started, no target row is found in block 0, but the row address RA4 is hit in block 1. Then, the arbiter 312b in the row controller 312 selects the row address RA4 from search result information from the search circuits 312a-0 and 312a-1. At the same time, the address pointer "AP4" heretofore stored in the row address RA4 is out as a cell read address from the address generating circuit to the cell buffer. In this case, the row controller 312 outputs the address pointer "AP4" to the cell buffer through the selector 350 shown in Fig. 17.

### (Shift Operation)

Fig. 23 is a diagram for explaining a shift operation (1) of the address generating circuit according to the invention.

When the shift operation is started, searches for leading vacant rows by the search circuits 312a-0 and 312a-1 in the row controller 312 are executed simultaneously in both blocks 0 and 1. Then, the leading vacant row address RA2 is hit in block 0, and the row address RA5 is hit in block 1. The arbiter 312b in the row controller 312 selects elder one, namely, the row address RA2 in block 0, from the search result information from the search circuits 312a-0 and 312a-1.

Next shown in Fig. 24 is a diagram for explaining a shift operation (2) of the address generating circuit according to the invention. Fig. 24 shows a state where rows subsequent to the row address RA2 have been shifted by one row, and the address pointer AP2 heretofore stored in the row address RA2 has been rewritten into the last row, namely the row address RA7, of block 1. More specifically, the row controller 312 rewrite the address pointer "AP2" in the address pointer register in the row address RA7 via the address pointer output bus 340-0 and the selector 350.

When searches for leading vacant rows are executed in Fig. 24, no vacant row is found in block 0, but the row address RA4 is hit in block 1. Therefore, the arbiter 312b in the row controller 312 selects the row address RA4.

Next shown in Fig. 25 is a diagram for explaining a shift operation (3) of the address generating circuit according to the invention. Fig. 25 shows a state where rows subsequent to the row address RA4 in Fig. 24 have been shifted by one row, and the address pointer "AP5" heretofore stored in the row address RA4 has been rewritten into the tail row, namely, the row address RA7, in block 1. The row controller 312 rewrite the address pointer "AP5" into the address pointer register in the row address RA7 through the selector 350.

When searches for leading vacant rows are executed in Fig. 25, no vacant row is found in block 0, but the row address RA4 is hit in block 1. Therefore, the arbiter 312b in the row controller 312 selects the row address RA4.

Next shown in Fig. 26 is a diagram for explaining a shift operation (4) of the address generating circuit according to the invention.

Here again, rows subsequent to the row address RA4 are shifted by one row, and the address pointer "AP6" heretofore stored in the row address RA4 is rewritten into the address pointer register in the row address RA7 through the selector 350. In this manner, row addresses RA0 to RA4 are in use, the row addresses RA5 to RA7 are vacant, and the shift operation is completed.

Although the above embodiment has been explained as dividing rows into 2 blocks, the rows may be divided into more blocks, on account of the cell buffer capacity, to optimize the speed.

Also, the invention may be modified appropriately in number of output links (bit width of address information registers) and in capacity of the address generating circuit.

Moreover, conditions of the row controller 312 for searches by the search circuit 312a and for selection by the arbiter 312b can be modified appropriately, if necessary.

## Claims

1. An ATM switch comprising:
address generating means having a plurality of address generating units connected together and each containing an address pointer register for storing an address pointer for a cell buffer and an address information register for storing an address bit map;
search means for searching out vacant address generating units in which all bits have been cleared from said address bit maps in said address information registers thereof;
count means for counting the number of vacant address generating units searched out by said search means; and
shift processing means for shifting contents of address generating units subsequent to said vacant address generating units searched out by a frequency corresponding to the count value of said count means.

2. The ATM switch according to claim 1 further comprising input processing means for storing an address bit map of a new cell in said vacant address generating unit every time when a new cell is input.

3. An ATM switch comprising:
address generating means having a plurality of address generating units connected together and each containing an address pointer register for storing an address pointer for a cell buffer and an address information register for storing an address bit map;
output processing means for outputting said address pointer in one of said address generating units in which a cell for a desired output link is stored;
search means for searching out vacant address generating units in which all bits have been cleared from said address bit maps in said address information registers thereof;
count means for counting the number of vacant address generating units searched out by said search means after an output operation by said output processing means; and
shift processing means for rewriting said address pointer of said vacant address generating units searched out and for shifting contents of address generating units subsequent to said vacant address generating units searched out by a frequency corresponding to the count value of said count means.

4. The ATM switch according to claim 3 further comprising input processing means for storing an address bit map of a new cell in said vacant address generating unit every time when a new cell is input.

5. The ATM switch according to claim 3, wherein said output processing means searches into said address bit maps in said address information registers in a predetermined order of addresses relative to a predetermined order of said output links, then outputs said address pointer in any of said address generating units hit by the search, and clears a bit corresponding to an output link under the search from said address bit map in said address information register of said address generating unit hit by the search.

6. The ATM switch according to claim 3, wherein said count means counts up if all bits are cleared from said address bit map in said address information register when said output processing means clears a bit from said address bit map.

7. An ATM switch comprising:
address generating means having a plurality of address generating units connected together and divided into a plurality of blocks, each said address generating unit containing an address pointer register for storing an address pointer for a cell buffer and an address information register for storing address information;
a search portion for searching into address generating units in parallel in said blocks; and
control means responsive to a result of the search by said search portion to control input operations, output operations and shift operations of said address generating units under predetermined conditions.

8. The ATM switch according to claim 7, wherein said control means includes:
vacant unit search means for finding out leading one of vacant address generating unit by sequentially searching into addresses, for which no effective cell is stored in said cell buffer, in response to contents of said address information registers in said address generating unit in each said block; and
leading vacant unit select means for selecting one from said leading vacant address generating units selected by said vacant unit search means in respective said blocks under a predetermined condition.

9. The ATM switch according to claim 8, wherein said control means further includes input control means for storing address information of a cell newly input into the cell buffer in said address information register of each said leading vacant address generating unit selected by said leading vacant unit select means.

10. The ATM switch according to claim 8, wherein said leading vacant address generating unit selected by said select means is an address generating unit having an earliest stored address stored and/or an address generating unit having desired address information.

11. The ATM switch according to claim 10, wherein said control means includes output control means for outputting said address pointer stored in said address pointer register in said address generating unit in one of said blocks under a predetermined condition when said address generating unit is found out by parallel searches in respective said blocks in a predetermined sequence on the basis of said address information stored in said address information registers.

12. The ATM switch according to claim 8, wherein said control means includes first shift control means for storing said leading vacant address generating unit selected by said leading vacant unit select means in one of address generating units having an address whose search priority is lowest.

13. The ATM switch according to claim 8, wherein said control means includes second shift control means for shifting all of said address generating units having a lower search priority than said leading vacant address generating unit selected by said leading vacant unit select means toward higher search priorities.

14. An ATM switch comprising:
address generating means having a plurality of address generating units each containing an address information register for storing address information and an address pointer register for storing an address pointer for a cell buffer, each said address generating units having data an input/output terminal connected to the input/output terminal of adjacent one of said address generating units, and said address generating units being divided into a plurality of blocks;
output bus means connected to all of all said address generating units in said address generating means to permit said address pointers to be output; and
control means including a search portion for finding out address generating units having cells with desired address information or vacant buffers simultaneously in respective said blocks with reference to said address information stored in said address information registers in said address generating units in respective said blocks, and a selector for selecting one of said address generating units found out by said search portion, said control means outputting said address pointer stored in said address pointer register of said address generating unit selected by said selector to said cell buffer or another of said address generating units through said output bus means.

15. The ATM switch according to claim 14, wherein said control means includes:
vacant unit search means for finding out leading one of vacant address generating units by sequentially searching into addresses, for which no effective cell is stored in said cell buffer, in response to contents of said address information registers in said address generating unit in each said block; and
leading vacant unit select means for selecting one from said leading vacant address generating units selected by said vacant unit search means in respective said blocks under a predetermined condition.

16. The ATM switch according to claim 15, wherein said control means further includes input control means for storing address information of a cell newly input into the cell buffer in said address information register of each said leading vacant address generating unit selected by said leading vacant unit select means.

17. The ATM switch according to claim 15, wherein said leading vacant address generating unit selected by said select means is an address generating unit having an earliest stored address stored and/or an address generating unit having said desired address information.

18. The ATM switch according to claim 17, wherein said control means includes output control means for outputting said address pointer stored in said address pointer register in said address generating unit in one of said blocks under a predetermined condition then said address generating unit is found out by parallel searches in respective said blocks in a predetermined sequence on the basis of said address information stored in said address information registers.

19. The ATM switch according to claim 15, wherein said control means includes first shift control means for storing said leading vacant address generating unit selected by said leading vacant unit select means in one of address generating units having an address whose search priority is lowest.

20. The ATM switch according to claim 15, wherein said control means includes second shift control means for shifting all of said address generating units having a lower search priority than said leading vacant address generating unit selected by said leading vacant unit select means toward higher search priorities.
